(19) **Europäisches Patentamt**
**European Patent Office**
**Office européen des brevets**

(11) **EP 1 715 376 B1**

(12) **EUROPEAN PATENT SPECIFICATION**

(45) Date of publication and mention of the grant of the patent:
**28.11.2012 Bulletin 2012/48**

(21) Application number: **05709970.7**

(22) Date of filing: **09.02.2005**

(51) Int Cl.:
*G02F 1/17* (2006.01)        *G02F 1/167* (2006.01)

(86) International application number:
**PCT/JP2005/001918**

(87) International publication number:
**WO 2005/076065 (18.08.2005 Gazette 2005/33)**

(54) **INFORMATION DISPLAY**

INFORMATIONSANZEIGE

AFFICHAGE D'INFORMATIONS

(84) Designated Contracting States:
**DE FR**

(30) Priority: **10.02.2004 JP 2004033228**

(43) Date of publication of application:
**25.10.2006 Bulletin 2006/43**

(73) Proprietor: **Bridgestone Corporation**
**Tokyo 104-8340 (JP)**

(72) Inventors:
 • **SAKURAI, Ryo**
 **Kokubunji-shi,**
 **Tokyo 1850003 (JP)**
 • **SHOJI, Takanori**
 **Higashimurayama-shi,**
 **Tokyo 1890001 (JP)**

 • **KOBAYASHI, Taichi**
 **Kodaira-shi,**
 **Tokyo 1870031 (JP)**
 • **HIRAOKA, Hidetoshi**
 **Shizuoka 426-0067 (JP)**

(74) Representative: **Oxley, Robin John George et al**
**Marks & Clerk LLP**
**90 Long Acre**
**London**
**WC2E 9RA (GB)**

(56) References cited:
**EP-A- 1 712 949        WO-A-03/104884**
**WO-A1-03/027763        JP-A- 2002 139 747**
**JP-A- 2002 328 375        JP-A- 2003 066 467**
**US-A1- 2003 030 884**

**Description**

TECHNICAL FIELD

The present invention relates to an information display device, in which display media (particles or liquid powders) are sealed between opposed substrates, at least one substrate being transparent, and, in which the display media (particles or the liquid powders), to which an electrostatic field is applied, are made to move so as to display information such as an image.

BACKGROUND ART

As an information display device substitutable for liquid crystal display (LCD), information display devices with the use of technology such as an electrophoresis method, an electro-chromic method, a thermal method, dichroic-particles-rotary method are proposed.

As for these information display devices, it is conceivable as inexpensive visual display device of the next generation from a merit having wide field of vision close to normal printed matter, having smaller consumption with LCD, or having a memory function, and spreading out to a display for portable device and an electronic paper is expected. Recently, electrophoresis method is proposed that microencapsulate dispersion liquid made up with dispersion particles and coloration solution and dispose the liquid between faced substrates, and also it is expected. WO03/104884 discloses an electrophoretic type display having the features specified in the preamble of claim 1.

However, in the electrophoresis method, there is a problem that a response rate is slow by the reason of viscosity resistance because the particles migrate among the electrophoresis solution. Further, there is a problem of lacking imaging repetition stability, because particles with high specific gravity of titanium oxide is scattered within solution of low specific gravity, it is easy to subside, difficult to maintain a stability of dispersion state. Even in the case of microencapsulating, cell size is diminished to a microcapsule level in order to make it hard to appear, however, an essential problem was not overcome at all.

Besides the electrophoresis method using behavior in the solution, recently, a method wherein electro-conductive particles and a charge transport layer are installed in a part of the substrate without using solution is proposed. [The Imaging Society of Japan "Japan Hardcopy '99" (July 21-23, 1999) Transaction Pages 249-252] However, the structure becomes complicated because the charge transport layer and further a charge generation layer are to be arranged. In addition, it is difficult to constantly dissipate charges from the electro-conductive particles, and thus there is a drawback on the lack of stability.

As one method for overcoming the various problems mentioned above, an information display device comprising an information display panel is known, in which cells are formed in an isolated manner from one another by partition walls between a front substrate and a rear substrate and the display media (particles or liquid powders) are sealed in the cells, and, in which the display media (particles or liquid powders), to which an electrostatic field is applied, are made to move by means of Coulomb's force and so on so as to display information such as an image. A display of this type is disclosed in EP-A-1712949, which was not published at the priority date of the present application.

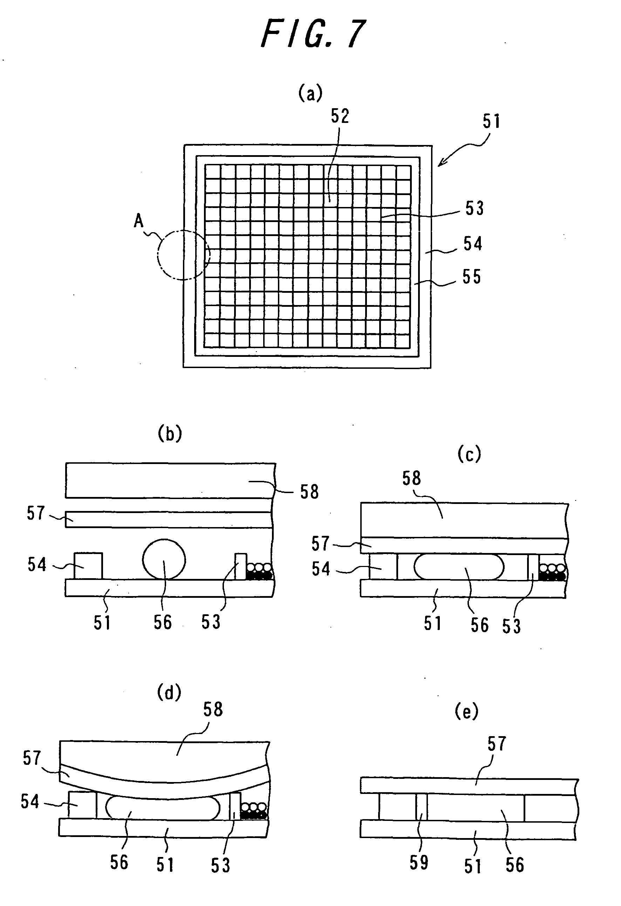

In the information display device mentioned above, a sealing agent arranging portion for sealing a most peripheral space between the front substrate and the rear substrate by a sealing agent exists. That is, as shown in Fig. 7a, a sealing agent arranging portion 55 is provided on a rear substrate 51 at a portion between outermost partition walls 53 among the partition walls 53 for forming cells 52 and a rib 54 for sealing a sealing agent. A width of the sealing agent arranging portion 55 for arranging a sealing agent 56 is about 2 mm with respect to the partition walls 53 and the rib 54 respectively having a height of about 50 $\mu$m, as shown in Fib. 7b showing a cross section of A portion in Fig. 7a.

Therefore, in the case of using a substrate having no flexibility such as a glass substrate as a front substrate 57, as shown in Fig. 7c, the front substrate 57 is not bent even if the sealing agent 56 is arranged to the sealing agent arranging portion 55 and the front substrate 57 is connected to the rear substrate 51 by a pressing process utilizing a ram head 58. However, in the case of using a substrate having flexibility such as a resin substrate as the front substrate 57, as shown in Fig. 7d, there is a drawback such that the front substrate 57 is bent by the pressing process at the sealing agent arranging portion 55 and a gap between the front substrate and the rear substrate becomes uneven, if the sealing agent 56 is arranged to the sealing agent arranging portion 55 and the front substrate 57 is connected to the rear substrate 51 by the pressing process utilizing the ram head 58. Moreover, it is concerned that a stress occurs due to a hardening and shrinking of the sealing agent 56. As a result, as shown in Fig. 7e, there is also a drawback such that a conductive pass 59 due to a carbonization of the sealing agent 56 by its tracking is generated and the information display panel is broken.

## DISCLOSURE OF INVENTION

An object of the present invention is to eliminate the drawbacks mentioned above and to provide an information display device, which can maintain a suitable gap endurable for a high voltage application and can prevent suitably a breakage of the information display panel.

According to the invention, an information display device, in which display media are sealed between a front substrate and a rear, opposed, substrate, at least one of the front substrate and the rear substrates being transparent, and at least one of the front substrate and the rear substrate being flexible and, in which the display media, to which an electrostatic field is applied, are made to move so as to display information such as an image, wherein spacers having an insulation property are arranged on a surface of at least one of the front substrate and the rear substrate in a sealing agent arranging portion, which seals a space between the front substrate and the rear substrate by a sealing agent and the sealing agent arranging portion is disposed between the outermost walls of the partition walls for forming cells and a rib for sealing a sealing agent disposed on at least one of the front substrate and the rear substrate. The display media may be particles or liquid powders.

Moreover, in the preferred embodiment of the information display device according to the invention, the spacers are manufactured simultaneously when partition walls for forming cells between the front substrate and the rear substrate are arranged on at least one of the front substrate and the rear substrate. Further, in the preferred embodiment of the information display device according to the invention, a total area of the spacers on the rear substrate is 0.5 - 50 % of the sealing agent arranging portion on the rear substrate.

## BRIEF DESCRIPTION OF DRAWINGS

[Fig. 1] Figs. 1a and 1b are schematic views respectively showing a driving method of an information display panel used in an information display device according to the invention.

[Fig. 2] Figs. 2a and 2b are schematic views respectively illustrating another driving method of an information display panel used in an information display device according to the invention.

[Fig. 3] Figs. 3a and 3b are schematic views respectively depicting still another driving method of an information display panel used in an information display device according to the invention.

[Fig. 4] Figs. 4a and 4b are schematic views respectively explaining one construction of an information display panel used in an information display device according to the invention.

[Fig. 5] Fig. 5 is a schematic view explaining another embodiment of an information display device according to the invention.

[Fig. 6] Fig. 6 is a schematic showing shapes of the partition walls in the information display panel used in the information display device according to the invention.

[Fig. 7] Figs. 7a - 7e are schematic views respectively explaining drawbacks in the known information display device.

## BEST MODE FOR CARRYING OUT THE INVENTION

At first, a basic construction of an information display panel used for an information display device utilizing the particles according to the invention will be explained. In the information display panel used in the present invention, an electrostatic field is applied to the particles sealed between opposed two substrates. Charged particles are attracted along a direction of electrostatic field to be applied by means of Coulomb's force in such a manner that the particles charged at a low potential are attracted toward a high potential side and the particles charged at a high potential are attracted toward a low potential side, and thus the particles can be moved reciprocally by varying a direction of electrostatic field due to a switching operation of potential. Accordingly, an image can be displayed. Therefore, it is necessary to design the information display panel in such a manner that the display media can move evenly and maintain stability during a reciprocal operation or during a reserving state. Here, in the case of using particles or liquid powders as the display media, as to forces applied to the particles, there are an attraction force between the particles due to Coulomb' force, an imaging force with respect to the electrode panel, an intermolecular force, a liquid bonding force and a gravity.

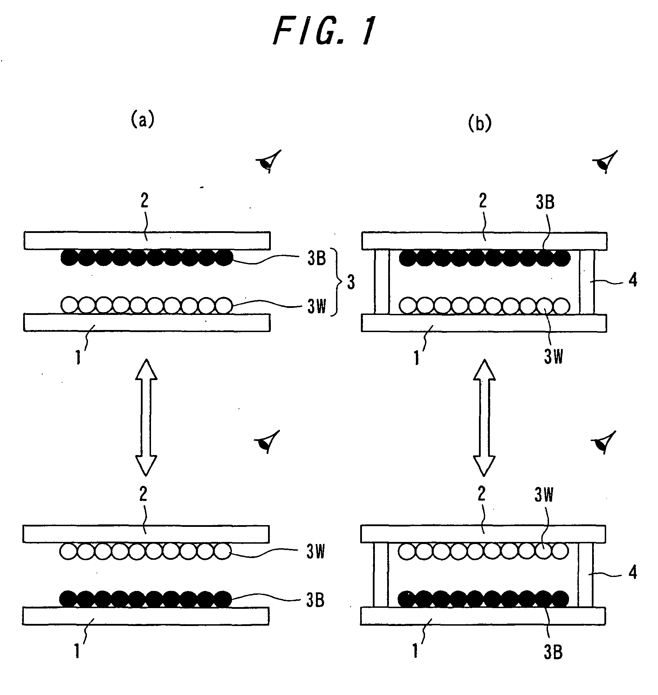

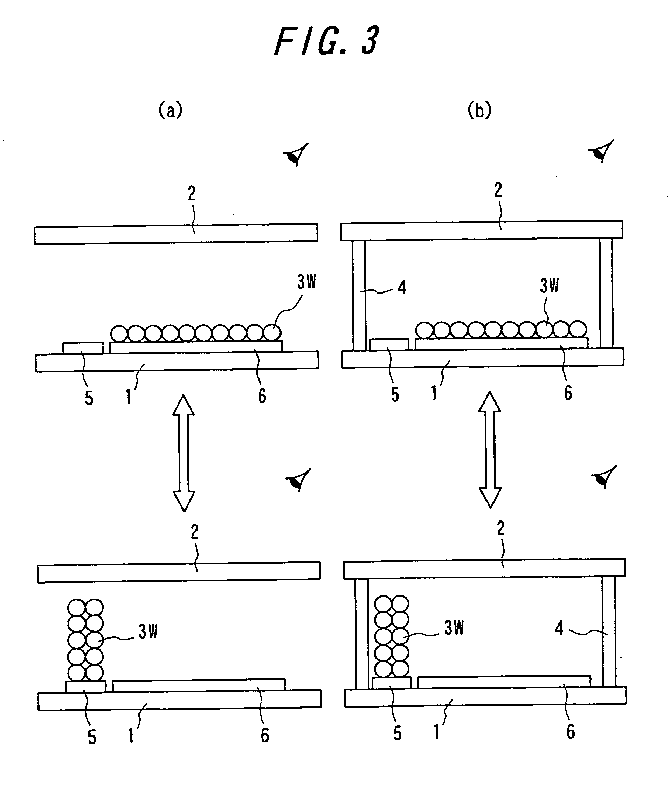

Examples of the information display panel according to the invention will be explained with reference to Figs. 1a and 1b - Figs. 3a and 3b.

In the examples shown in Figs. 1a and 1b, at least two or more groups of display media 3 having different colors and consisting of at least one or more groups of particles (here, a white color display media 3W made of the particles and a black color display media 3B made of the particles are shown) are moved in a perpendicular direction with respect to substrates 1 and 2, in accordance with an electric field applied outside of the substrates 1 and 2, so as to display a black color by viewing the black color display media 3B to an observer or so as to display a white color by viewing the white color display media 3W to the observer. In the example shown in Fig. 1b, a cell is formed by arranging for example grid-like partition walls 4 between the substrates 1 and 2, in addition to the example shown in Fig. 1a. Moreover, in Fig. 1b, the partition walls arranged at the near side are omitted.

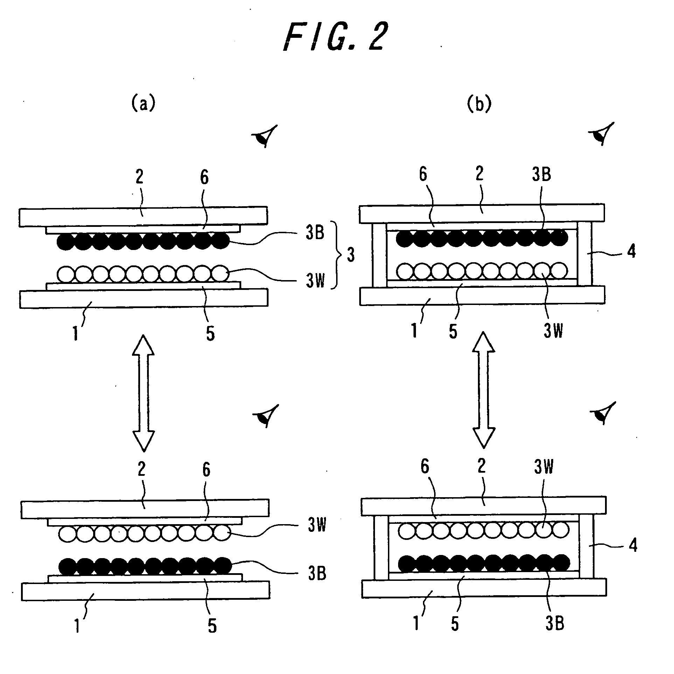

In the examples shown in Figs. 2a and 2b, at least two or more groups of display media 3 having different colors and consisting of at least one or more groups of particles (here, a white color display media 3W made of the particles and a black color display media 3B made of the particles are shown) are moved in a perpendicular direction with respect to substrates 1 and 2, in accordance with an electric field generated by applying a voltage between an electrode 5 arranged to the substrate 1 and an electrode 6 arranged to the substrate 2, so as to display a black color by viewing the black color display media 3B to an observer or so as to display a white color by viewing the white color display media 3W to the observer. In the example shown in Fig. 2b, a cell is formed by arranging for example grid-like partition walls 4 between the substrates 1 and 2, in addition to the example shown in Fig. 2a. Moreover, in Fig. 2b, the partition walls arranged at the near side are omitted.

In the examples shown in Figs. 3a and 3b, at least one group of display media 3 having a color and consisting of at least one or more groups of particles (here, a white color display media 3W made of the particles) are moved in a parallel direction with respect to substrates 1 and 2, in accordance with an electric field generated by applying a voltage between the electrode 5 arranged to the substrate 1 and the electrode 6 arranged to the substrate 1, so as to display a white color by viewing the white color display media 3W to an observer or so as to display a color of the electrode 6 or the substrate 1 by viewing a color of the electrode 6 or the substrate 1 to the observer. In the example shown in Fig. 3b, a cell is formed by arranging for example grid-like partition walls 4 between the substrates 1 and 2, in addition to the example shown in Fig. 3a. Moreover, in Fig. 3b, the partition walls arranged at the near side are omitted.

The above explanations can be applied to a case such that the white color display media 3W are substituted by white color display media made of liquid powders or a case such that the black color display media 3B are substituted by black color display media made of liquid powders.

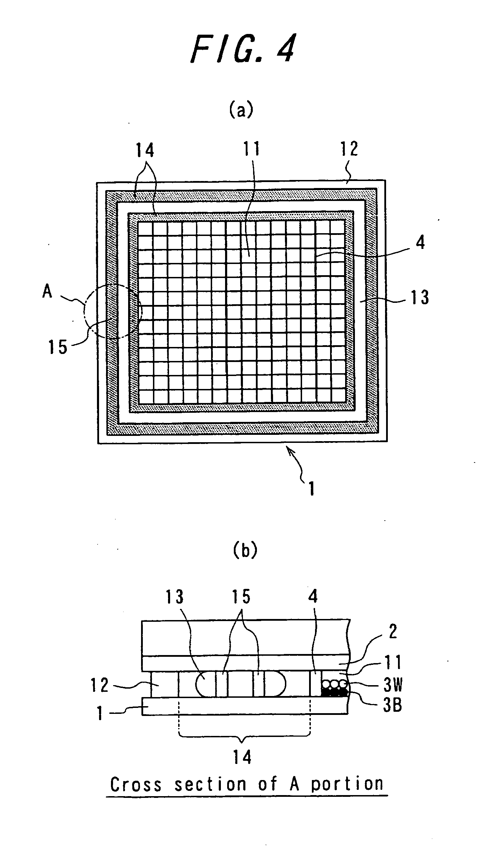

Figs. 4a and 4b are schematic views respectively explaining one construction of the information display device according to the invention, in which Fig. 4a shows a plan view of the information display panel and Fig. 4b illustrates a cross section of A portion in the embodiment shown in Fig. 4a. In the embodiment shown in Figs. 4a and 4b, the information display panel constituting the information display device is constructed for example in such a manner that the white color particles (or white color liquid powders) 3W and the black color particles (or black color liquid powders) 3B are sealed in a cell 11 formed by the partition walls 4 on the rear substrate 1 between the rear substrate 1 and the front substrate 2 both made of resin. Moreover, on the rear substrate 1, a sealing agent arranging portion 14 for arranging a sealing agent 13 is provided between outermost partition walls 4 among the partition walls 4 and a rib 12 for sealing a sealing agent. Further, in the present invention, in addition to the construction mentioned above, a plurality of spacers 15 are provided in the sealing agent arranging portion 14 formed on the rear substrate 1 so as to construct the information display panel.

In this embodiment, shape, dimension and so on of the spacers 15 are not particularly limited, but, as one example, a diameter is 200 $\mu$m which is substantially same as one side length of the cell 11, a height is 50 $\mu$m which is substantially same as that of the partition walls 4, and a shape is a dotted shape. An amount of the spacers 15 is not limited, but, if the amount is too small, a function for strengthening the resin substrate is not achieved, and, if the amount is too large, a function of the sealing agent 12 is prohibited. Therefore, it is preferred to set a total area of the spacers 15 on the rear substrate 1 to 0.5 - 50 % with respect to the sealing agent arranging portion 14 on the rear substrate 1. Moreover, as to a material of the spacers 15, use may be made of any materials if it has an insulation property. Further, a method of manufacturing the spacers 15 is not limited, but, it is preferred that the spacers are formed simultaneously when the partition walls 4 are formed, i.e. if the partition walls 4 are formed by a photolithography method, the spacers 15 are formed simultaneously by the photolithography method.

In the information display panel mentioned above according to the invention, even in the case of using the front substrate 2 made of resin, it is possible to prevent a bend of the front substrate 2 made of resin during the pressing process by arranging the spacers 15 in the sealing agent arranging portion 14 on the rear substrate 1, as is the same as the glass substrate. Therefore, it is possible maintain a suitable gap endurable to a high voltage application such as for example 2 kV/mm (100 V / 50 $\mu$m) between the rear substrate 1 and the front substrate 2, and thus it is possible to suitably prevent a breakage of the information display panel. Further, it is also possible to improve a moisture-resistant property of the information display panel.

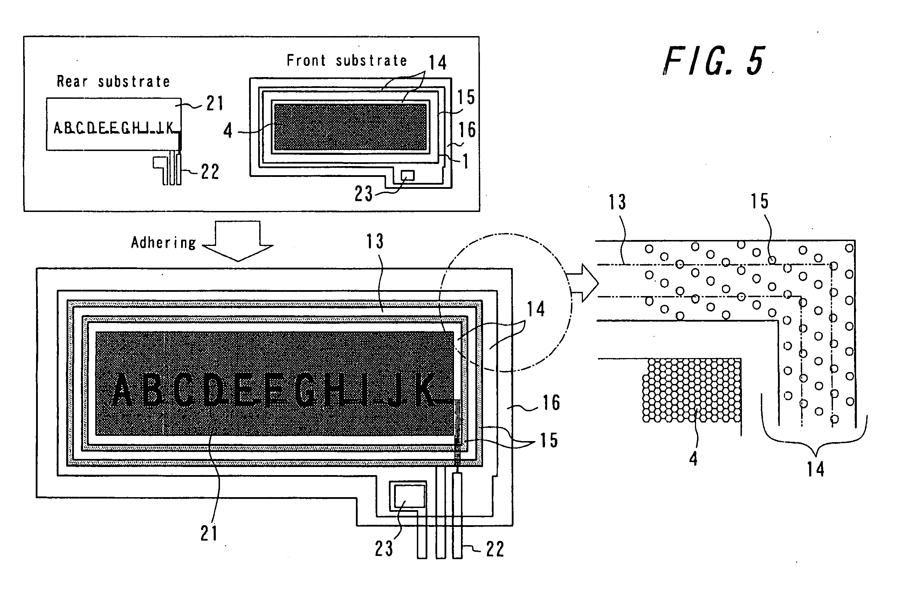

Fig. 5 is a schematic view explaining another embodiment of the information display device according to the invention. In the embodiment shown in Fig. 5, the present invention is applied to a segment panel for IC card. In the embodiment shown in Fig. 5, at first, the rear substrate 1, on which a segment display portion 21 and a segment wiring 22 are previously formed, is prepared, and, the front substrate 2, on which a common wiring 23, the partition walls 4, a plurality of spacers 15 having a dotted shape on the sealing agent arranging portion 14 and the rib 12 are previously formed, is prepared. In this case, the partition walls 4, the spacers 15 and the rib 12 are formed simultaneously by a photolithography method. Then, the rear substrate 1 and the front substrate 2 are bonded under a condition such that the sealing agent 13 is arranged on the sealing agent arranging portion 14. In this case, the common wiring 23 on the front substrate 2 and the segment wiring 22 on the rear substrate 1 are connected by means of a silver paste. As illustrated on an enlarged view of A portion in Fig. 5, since the spacers 15 are evenly provided in the sealing agent 13, it is possible to obtain a segment panel for IC card in which the resin substrate is strengthened.

Hereinafter, respective members constituting the information display device according to the invention will be explained in detail.

As the substrate, at least one of the substrates is the transparent front substrate 2 through which a color of the particles or the liquid powders can be observed from outside of the device, and it is preferred to use a material having a high transmission factor of visible light and an excellent heat resistance. The rear substrate 1 may be transparent or may be opaque. Examples of the substrate material include polymer sheets such as polyethylene terephthalate, polyether sulfone, polyethylene, polycarbonate, polyimide or acryl and metal sheets having flexibility and inorganic sheets such as glass, quartz or so having no flexibility. The thickness of the substrate is preferably 2 to 400 $\mu$m, more preferably 5 to 300 $\mu$m. When the thickness is too thin, it becomes difficult to maintain strength and distance uniformity between the substrates, and when the thickness is thicker than 400 $\mu$m, a stress due to bending becomes strong and there is a drawback on a connection of electrodes.

As a material of the electrode in the case of arranging the electrode on the information display panel, use is made of metals such as aluminum, silver, nickel, copper, gold, or, conductive metal oxides such as ITO, indium oxide, conductive tin oxide, conductive zinc oxide and so on, or, conductive polymers such as polyaniline, polythiophene and so on, and they are used by being suitably selected. As an electrode forming method, use is made of a method in which the materials mentioned above are made to a thin film by means of sputtering method, vacuum vapor deposition method, CVD (chemical vapor deposition) method, coating method and so on, or, a method in which conductive materials and solvents are mixed with synthetic resin binder and the mixture is sprayed. A transparency is necessary for the electrode arranged to the substrate at an observation side (display surface side), but it is not necessary to the substrate at a rear side. In both cases, the materials mentioned above, which are transparent and have a pattern formation capability, can be suitably used. Additionally, the thickness of the electrode may be suitable unless the electro-conductivity is absent or any hindrance exists in optical transparency, and it is preferable to be 3 to 1000 nm, more preferable to be 5 to 400 nm. The material and the thickness of the electrode arranged to the rear substrate are the same as those of the electrode arranged to the substrate at the display side, but transparency is not necessary. In this case, the applied outer voltage may be superimposed with a direct current or an alternate current.

As the partition wall 4 arranged according to need, a shape of the partition wall is suitably designed in accordance with a kind of the display media used for the display and is not restricted. However, it is preferred to set a width of the partition wall to 2 - 100 $\mu$m more preferably 3 - 50 $\mu$m and to set a height of the partition wall to 10 - 500 $\mu$m more preferably 10 - 200 $\mu$m. Moreover, as a method of forming the partition wall, use may be made of a double rib method wherein ribs are formed on the opposed substrates respectively and they are connected with each other and a single rib method wherein a rib is formed on one of the opposed substrates only. The present invention may be preferably applied to both methods mentioned above.

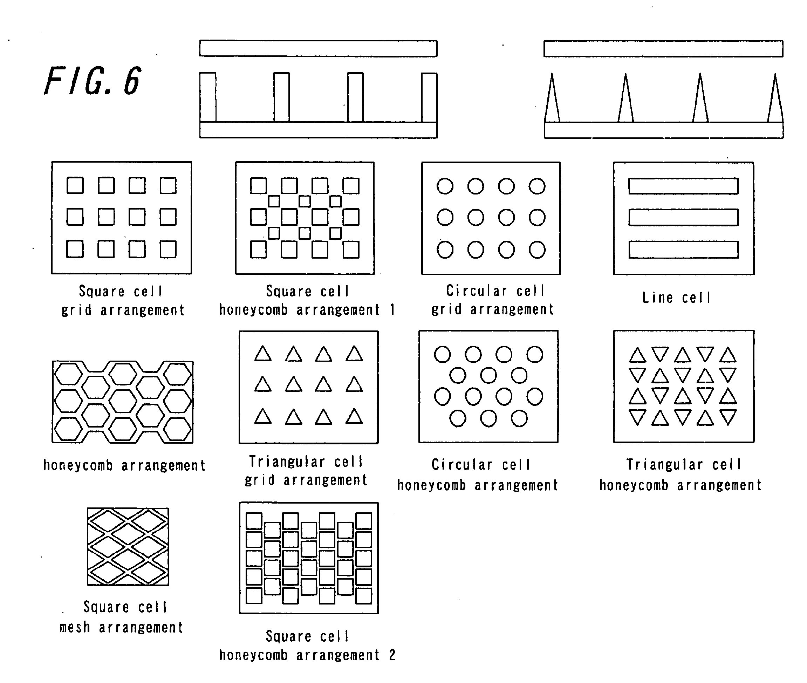

The cell formed by the partition walls each made of rib has a square shape, a triangular shape, a line shape, a circular shape and a hexagon shape, and has an arrangement such as a grid, a honeycomb and a mesh, as shown in Fig. 6 viewed from a plane surface of the substrate. It is preferred that the portion corresponding to a cross section of the partition wall observed from the display side (an area of the frame portion of the display cell) should be made as small as possible. In this case, a clearness of the image display can be improved. The formation method of the partition wall is not particularly restricted, however, a die transfer method, a screenprinting method, a sandblast method, a photolithography method and an additive method. Among them, it is preferred to use a photolithography method using a resist film or a die transfer method.

Then, the particle constituting the particles used in the information display device according to the invention will be explained. The particle may be composed of resins as a main ingredient, and can include according to need charge control agents, coloring agent, inorganic additives and so on as is the same as the known one.

Hereinafter, typical examples of resin, charge control agent, coloring agent, additive and so on will be explained.

Typical examples of the resin include urethane resin, urea resin, acrylic resin, polyester resin, acryl urethane resin, acryl urethane silicone resin, acryl urethane fluorocarbon polymers, acryl fluorocarbon polymers, silicone resin, acryl silicone resin, epoxy resin, polystyrene resin, styrene acrylic resin, polyolefin resin, butyral resin, vinylidene chloride resin, melamine resin, phenolic resin, fluorocarbon polymers, polycarbonate resin, polysulfon resin, polyether resin, and polyamide resin. Two kinds or more of these may be mixed and used. For the purpose of controlling the attaching force with the substrate, acryl urethane resin, acryl silicone resin, acryl fluorocarbon polymers, acryl urethane silicone resin, acryl urethane fluorocarbon polymers, fluorocarbon polymers, silicone resin are particularly preferable.

Examples of the electric charge control agent include, but not particularly specified to, negative charge control agent such as salicylic acid metal complex, metal containing azo dye, oil-soluble dye of metal-containing (containing a metal ion or a metal atom), the fourth grade ammonium salt-based compound, calixarene compound, boron-containing compound (benzyl acid boron complex), and nitroimidazole derivative. Examples of the positive charge control agent include nigrosine dye, triphenylmethane compound, the fourth grade ammonium salt compound, polyamine resin, imidazole derivatives, etc. Additionally, metal oxides such as ultra-fine particles of silica, ultra-fine particles of titanium oxide, ultra-fine particles of alumina, and so on; nitrogen-containing circular compound such as pyridine, and so on, and these derivates or salts; and resins containing various organic pigments, fluorine, chlorine, nitrogen, etc. can be employed as the electric charge control agent.

As for a coloring agent, various kinds of organic or inorganic pigments or dye as will be described below are employable.

Examples of black pigments include carbon black, copper oxide, manganese dioxide, aniline black, and activate carbon.

Examples of blue pigments include C.I. pigment blue 15:3, C.I. pigment blue 15, Berlin blue, cobalt blue, alkali blue lake, Victoria blue lake, phthalocyanine blue, metal-free phthalocyanine blue, partially chlorinated phthalocyanine blue, first sky blue, and Indanthrene blue BC.

Examples of red pigments include red oxide, cadmium red, diachylon, mercury sulfide, cadmium, permanent red 4R, lithol red, pyrazolone red, watching red, calcium salt, lake red D, brilliant carmine 6B, eosin lake, rhodamine lake B, alizarin lake, brilliant carmine 3B, and C.I. pigment red 2.

Examples of yellow pigments include chrome yellow, zinc chromate, cadmium yellow, yellow iron oxide, mineral first yellow, nickel titanium yellow, navel orange yellow, naphthol yellow S, hanzayellow G, hanzayellow 10G, benzidine yellow G, benzidine yellow GR, quinoline yellow lake, permanent yellow NCG, tartrazinelake, and C.I. pigment yellow 12.

Examples of green pigments include chrome green, chromium oxide, pigment green B, C.I. pigment green 7,Malachite green lake, and final yellow green G.

Examples of orange pigments include red chrome yellow, molybdenum orange, permanent orange GTR, pyrazolone orange, Balkan orange, Indanthrene brilliant orange RK, benzidine orange G, Indanthrene brilliant orange GK, and C.I. pigment orange 31.

Examples of purple pigments include manganese purple, first violet B, and methyl violet lake.

Examples of white pigments include zinc white, titanium oxide, antimony white, and zinc sulphide.

Examples of extenders include baryta powder, barium carbonate, clay, silica, white carbon, talc, and alumina white. Furthermore, there are Nigrosine, Methylene Blue, rouge (red iron oxide), quinoline yellow, and ultramarine blue as various dyes such as basic dye, acidic dye, dispersion dye, direct dye, etc.

Examples of inorganic additives include titanium oxide, zinc white, zinc sulphide, antimony oxide, calcium carbonate, pearl white, talc, silica, calcium silicate, alumina white, cadmium yellow, cadmium red, titanium yellow, Pressian blue, Armenian blue, cobalt blue, cobalt green, cobalt violet, ion oxide, carbon black, manganese ferrite black, cobalt ferrite black, copper powder, aluminum powder.

These coloring agents and inorganic additives may be used alone or in combination of two or more kinds thereof. Particularly, carbon black is preferable as the black coloring agent, and titanium oxide is preferable as the white coloring agent.

Moreover, as the average particle diameter d(0.5) of the particles to be used, it is preferred to set d(0.5) to 0.1 - 50 $\mu$m and to use even particles. If the average particle diameter d(0.5) exceeds this range, the image clearness sometimes deteriorated, and, if the average particle diameter is smaller than this range, an agglutination force between the particles becomes larger and the movement of the particles is prevented.

Further, it is preferred that particle diameter distribution Span of the particles, which is defined by the following formula, is not more than 5 preferably not more than 3:

$$\mathrm{Span} = (\mathrm{d}(0.9) - \mathrm{d}(0.1))/\mathrm{d}(0.5) \; ;$$

(here, d(0.5) means a value of the particle diameter expressed by $\mu$m wherein an amount of the particles having the particle diameter larger than or smaller than this value is 50%, d(0.1) means a value of the particle diameter expressed by $\mu$m wherein an amount of the particles having the particle diameter smaller than this value is 10%, and d(0.9) means a value of the particle diameter expressed by $\mu$m wherein an amount of the particles having the particle diameter smaller than this value is 90%).

If the particle diameter distribution Span of the particles is set to not more than 5, the particle diameter becomes even and it is possible to perform an even particle movement.

Furthermore, as a correlation between the particles, it is preferred to set a ratio of d(0.5) of the particles having smallest diameter with respect to d(0.5) of the particles having largest diameter to not more than 50 preferably not more than 10. The particles having different charge characteristics with each other are moved reversely, even if the particle diameter distribution Span is made smaller. Therefore, it is preferred that the particle sizes of the particles are made to be even with each other, and same amounts of the particles are easily moved in a reverse direction, and thus that is this range.

Here, the particle diameter distribution and the particle diameter mentioned above can be measured by means of a laser diffraction / scattering method. When a laser light is incident upon the particles to be measured, a light intensity distribution pattern due to a diffraction / scattering light occurs spatially. This light intensity distribution pattern corresponds to the particle diameter, and thus it is possible to measure the particle diameter and the particle diameter distribution. In the present invention, it is defined that the particle diameter and the particle diameter distribution are obtained by a volume standard distribution. Specifically, the particle diameter and the particle diameter distribution can be measured by means of a measuring apparatus Mastersizer 2000 (Malvern Instruments Ltd.) wherein the particles setting in a nitrogen gas flow are calculated by an installed analysis software (which is based on a volume standard distribution due to Mie's theory).

Then, the liquid powders used in the invention will be explained.

In the present invention, a term "liquid powders" means an intermediate material having both of liquid properties and particle properties and exhibiting a self-fluidity without utilizing gas force and liquid force. Preferably, it is a material having an excellent fluidity such that there is no repose angle defining a fluidity of powder. For example, a liquid crystal is defined as an intermediate phase between a liquid and a solid, and has a fluidity showing a liquid characteristic and an anisotropy (optical property) showing a solid characteristic (Heibonsha Ltd.: encyclopedia). On the other hand, a definition of the particle is a material having a finite mass if it is vanishingly small and receives an attraction of gravity (Maruzen Co., Ltd.: physics subject-book). Here, even in the particles, there are special states such as gas-solid fluidized body and liquid-solid fluidized body. If a gas is flown from a bottom plate to the particles, an upper force is acted with respect to the particles in response to a gas speed. In this case, the gas-solid fluidized body means a state that is easily fluidized when the upper force is balanced with the gravity. In the same manner, the liquid-solid fluidized body means a state that is fluidized by a liquid. (Heibonsha Ltd.: encyclopedia) In the present invention, it is found that the intermediate material having both of fluid properties and solid properties and exhibiting a self-fluidity without utilizing gas force and liquid force can be produced specifically, and this is defined as the liquid powders.

That is, as is the same as the definition of the liquid crystal (intermediate phase between a liquid and a solid), the liquid powders according to the invention are a material showing the intermediate state having both of liquid properties and particle properties, which is extremely difficult to receive an influence of the gravity showing the particle properties mentioned above and indicates a high fluidity. Such a material can be obtained in an aerosol state i.e. in a dispersion system wherein a solid-like or a liquid-like material is floating in a relatively stable manner as a dispersant in a gas, and thus, in the information display device according to the invention, a solid material is used as a dispersant.

The information display panel which is a target of the present invention has a construction such that the liquid powders composed of a solid material stably floating as a dispersoid in a gas and exhibiting a high fluidity in an aerosol state are sealed between opposed two substrates, wherein one of two substrates is transparent. Such liquid powders can be made to move easily and stably by means of Coulomb's force and so on generated by applying a low voltage.

As mentioned above, the liquid powders means an intermediate material having both of liquid properties and particle properties and exhibiting a self-fluidity without utilizing gas force and liquid force. Such liquid powders become particularly an aerosol state. In the information display device according to the invention, the liquid powders used in a state such that a solid material is relatively and stably floating as a dispersoid in a gas.

As the aerosol state, it is preferred that an apparent volume in a maximum floating state is two times or more than that in none floating state, more preferably 2.5 times or more than that in none floating state, and most preferably three times or more than that in none floating state. In this case, an upper limit is not defined, but it is preferred that an apparent volume is 12 times or smaller than that in none floating state.

If the apparent volume in the maximum floating state is smaller than two times, a display controlling becomes difficult. On the other hand, if the apparent volume in the maximum floating state is larger than 12 times, a handling inconvenience during a liquid powders filling operation into the device such as a particle over-scattering occurs. That is, it is measured by filling the liquid powders in a transparent closed vessel through which the liquid powders are seen; vibrating or dropping the vessel itself to obtain a maximum floating state; and measuring an apparent volume at that time from outside of the vessel. Specifically, the liquid powders having a volume 1/5 of the vessel are filled as the liquid powders in a polypropylene vessel with a cap having a diameter (inner diameter) of 6 cm and a height of 10 cm (product name 1-boy produced by As-one Co., Ltd.), the vessel is set in the vibrator, and a vibration wherein a distance of 6 cm is repeated at a speed of 3 reciprocating/sec. is performed for 3 hours. Then, the apparent volume in the maximum floating state is obtained from an apparent volume just after a vibration stop.

Moreover, according to the invention, it is preferred that a time change of the apparent volume of the liquid powders satisfies the following formula:

$$V_{10}/V_5 > 0.8;$$

here, $V_5$ indicates the apparent volume (cm$^3$) of the liquid powders after 5 minutes from the maximum floating state; and $V_{10}$ indicates the apparent volume (cm$^3$) of the liquid powders after 10 minutes from the maximum floating state. In this case, in the information display panel according to the invention, it is preferred to set the time change $V_{10}/V_5$ of the apparent volume of the liquid powders to larger than 0.85, more preferably larger than 0.9. If the time change $V_{10}/V_5$ is not larger than 0.8, the liquid powders are substantially equal to normal particles, and thus it is not possible to maintain a high speed response and durability according to the invention.

Moreover, it is preferred that the average particle diameter d(0.5) of the particle materials constituting the liquid powders is 0.1 - 20 μm, more preferably 0.5 - 15 μm, most preferably 0.9 - 8 μm. If the average particle diameter d(0.5) is less than 0.1 μm, a display controlling becomes difficult. On the other hand, if the average particle diameter d(0.5) is larger than 20 μm, a display clearness becomes deteriorated. Here, the average particle diameter d(0.5) of the particle materials constituting the liquid powders is equal to d(0.5) in the following particle diameter distribution Span.

It is preferred that particle diameter distribution Span of the particle material constituting the liquid powders, which is defined by the following formula, is not more than 5 preferably not more than 3:

$$\text{Particle diameter distribution: Span} = (d(0.9) - d(0.1))/d(0.5) ;$$

here, d(0.5) means a value of the particle diameter expressed by μm wherein an amount of the particle material constituting the liquid powders having the particle diameter larger than this value is 50% and an amount of the particle material constituting the liquid powders having the particle diameter expressed by μm wherein an amount of the particle material constituting the liquid powders having a particle diameter smaller than this value is 10%, and d(0.9) means a value of the particle diameter expressed by μm wherein an amount of the particle material constituting the liquid powders having the particle diameter smaller than this value is 90%. If the particle diameter distribution Span of the particle materials constituting the liquid powders is set to not more than 5, the particle diameter becomes even and it is possible to perform an even liquid powders movement.

Here, the particle diameter distribution and the particle diameter mentioned above can be measured by means of a laser diffraction / scattering method. When a laser light is incident upon the particles to be measured, a light intensity distribution pattern due to a diffraction / scattering light occurs spatially. This light intensity distribution pattern corresponds to the particle diameter, and thus it is possible to measure the particle diameter and the particle diameter distribution. In the present invention, it is defined that the particle diameter and the particle diameter distribution are obtained by a volume standard distribution. Specifically, the particle diameter and the particle diameter distribution can be measured by means of a measuring apparatus Mastersizer 2000 (Malvern Instruments Ltd.) wherein the particles setting in a nitrogen gas flow are calculated by an installed analysis software (which is based on a volume standard distribution due to Mie's theory).

The liquid powders may be formed by mixing necessary resin, charge control agent, coloring agent, additive and so on and crushing them, or, by polymerizing from monomer, or, by coating a particle with resin, charge control agent, coloring agent, and additive and so on. Hereinafter, typical examples of resin, charge control agent, coloring agent, additive and so on constituting the liquid powders will be explained.

Typical examples of the resin include urethane resin, acrylic resin, polyester resin, modified acryl urethane resin, silicone resin, nylon resin, epoxy resin, styrene resin, butyral resin, vinylidene chloride resin, melamine resin, phenolic resin, fluorocarbon polymers, and it is possible to combine two or more resins. For the purpose of controlling the attaching force with the substrate, acryl urethane resin, acryl urethane silicone resin, acryl urethane fluorocarbon polymers, urethane resin, fluorocarbon polymers are preferred.

Examples of the charge control agent include, positive charge control agent including the fourth grade ammonium salt compound, nigrosine dye, triphenylmethane compound, imidazole derivatives, and so on, and negative charge control agent such as metal containing azo dye, salicylic acid metal complex, nitroimidazole derivative and so on.

As for a coloring agent, various kinds of organic or inorganic pigments or dye are employable.

Examples of black pigments include carbon black, copper oxide, manganese dioxide, aniline black, and activate carbon.

Examples of blue pigments include C.I. pigment blue 15:3, C.I. pigment blue 15, Berlin blue, cobalt blue, alkali blue lake, Victoria blue lake, phthalocyanine blue, metal-free phthalocyanine blue, partially chlorinated phthalocyanine blue, first sky blue, and Indanthrene blue BC.

Examples of red pigments include red oxide, cadmium red, diachylon, mercury sulfide, cadmium, permanent red 4R, lithol red, pyrazolone red, watching red, calcium salt, lake red D, brilliant carmine 6B, eosin lake, rhodamine lake B, alizarin lake, brilliant carmine 3B, and C.I. pigment red 2.

Examples of yellow pigments include chrome yellow, zinc chromate, cadmium yellow, yellow iron oxide, mineral first yellow, nickel titanium yellow, navel orange yellow, naphthol yellow S, hanzayellow G, hanzayellow 10G, benzidine yellow G, benzidine yellow GR, quinoline yellow lake, permanent yellow NCG, tartrazinelake, and C.I. pigment yellow 12.

Examples of green pigments include chrome green, chromium oxide, pigment green B, C.I. pigment green 7,Malachite green lake, and final yellow green G.

Examples of orange pigments include red chrome yellow, molybdenum orange, permanent orange GTR, pyrazolone orange, Balkan orange, Indanthrene brilliant orange RK, benzidine orange G, Indanthrene brilliant orange GK, and C.I. pigment orange 31.

Examples of purple pigments include manganese purple, first violet B, and methyl violet lake.

Examples of white pigments include zinc white, titanium oxide, antimony white, and zinc sulphide.

Examples of extenders include baryta powder, barium carbonate, clay, silica, white carbon, talc, and alumina white. Furthermore, there are Nigrosine, Methylene Blue, rouge (red iron oxide), quinoline yellow, and ultramarine blue as various dyes such as basic dye, acidic dye, dispersion dye, direct dye, etc.

Examples of inorganic additives include titanium oxide, zinc white, zinc sulphide, antimony oxide, calcium carbonate, pearl white, talc, silica, calcium silicate, alumina white, cadmium yellow, cadmium red, titanium yellow, Pressian blue, Armenian blue, cobalt blue, cobalt green, cobalt violet, ion oxide, carbon black, manganese ferrite black, cobalt ferrite black, copper powder, aluminum powder.

These coloring agents and inorganic additives may be used alone or in combination of two or more kinds thereof. Particularly, carbon black is preferable as the black coloring agent, and titanium oxide is preferable as the white coloring agent.

However, if the above materials are only mixed or coated with no contrivance, the liquid powders exhibiting an aerosol state cannot be obtained. The regular method of forming the liquid powders exhibiting an aerosol state is not defined, but the following method is preferably used.

At first, inorganic fine particles having an average particle size of 20 - 100 nm preferably 20 - 80 nm are preferably fixed on a surface of materials constituting the liquid powders. Moreover, it is preferred that the inorganic fine particles are made of tow or more groups of fine particles. Further, it is preferred to treat the inorganic fine particles by silicone oil. Here, as for the inorganic fine particles, use may be made of silicon dioxide (silica), zinc oxide, aluminum oxide, magnesium oxide, cerium oxide, ferric oxide, copper oxide and so on. In this case, a method of fixing the inorganic fine particles is important. For example, use may be made of hybridizer (NARA Machinery Industry Co., Ltd.) or mechanofusion (Hosokawa Micron Co., Ltd.), and the liquid powders showing an aerosol state are formed under a predetermined condition (for example processing time).

Further, in the present invention, it is important to control a gas in a gap surrounding the particles and liquid powders between the substrates, and a suitable gas control contributes an improvement of display stability. Specifically, it is important to control a humidity of the gap gas to not more than 60% RH at 25°C, preferably not more than 50% RH, more preferably not more than 35% RH.

The above gap means a gas portion surrounding the display media (particles or liquid powders) obtained by substituting the electrodes 5, 6, an occupied portion of the display media (particles or liquid powders) 3, an occupied portion of the partition walls 4 (in the case of arranging the partition wall) and a seal portion of the device from the space between the substrate 1 and the substrate 2 for example in Fig. 1 - Fig. 3.

A kind of the gap gas is not limited if it has the humidity mentioned above, but it is preferred to use dry air, dry nitrogen gas, dry argon gas, dry helium gas, dry carbon dioxide gas, dry methane gas and so on. It is necessary to seal this gas in the device so as to maintain the humidity mentioned above. For example, it is important to perform the operations of filling the display media (particles or liquid powders) and assembling the substrate under an atmosphere having a predetermined humidity and to apply a seal member and a seal method for preventing a humidity inclusion from outside of the device.

In the information display panel according to the invention, an interval between the substrates is not restricted if the particles or the liquid powders can be moved and a contrast can be maintained, and it is adjusted normally to 10 - 500 μm, preferably 10 - 200 μm.

Moreover, it is preferred to control a volume occupied rate of the display media (particles or liquid powders) in a space between the opposed substrates to 5 - 70 vol %, more preferably 5 - 60 vol %. If the volume occupied rate of the particles or the liquid powders exceeds 70 vol %, the display media (particles or liquid powders) become difficult to move, and if it is less than 5 vol %, a sufficient contrast cannot be obtained and a clear image display is not performed.

Hereinafter, the present invention will be explained further specifically with reference to examples and comparative examples. However, the present invention is not limited to the below experiment.

<Example 1>

According to the method mentioned above, the information display panel of the information display device was manufactured. In this manufacturing, a substrate made of polycarbonate was used as the rear substrate 1 and the front substrate 2. When the partition walls 4 and the rib 12 were formed on the rear substrate 1 by means of a photolithography method, the spacers 15 were formed in the sealing agent arranging portion 14 simultaneously with the manufacturing of the partition walls 4 and the rib 12, by using a mask for photolithography to which patterns for the dotted spacers were applied. Then, the rear substrate 1 adhered to the front substrate 2 so as to manufacture the information display panel. In this case, a pressing stress and a short occurring frequency (%) between the substrates, when the rear substrate 1 and the front substrate 2 were bonded to form a stacked construction, were measured. The results are shown in Table 1.

<Comparative example 1>

As is the same as the example 1, the information display panel was manufactured. In this case, the following differed from the example 1: such that the spacers 15 were not formed in the sealing agent arranging portion 14. Then, as is the same as the example 1, the pressing stress and the short occurring frequency (%) between the substrates, when stacking, were measured. The results are shown in Table 1.

[Table 1]

|  | Example 1 | Comparative example 1 |
|---|---|---|
| Manufacturing method | Applying patterns for dotted spacers to mask for photolithography used whe n forming partition walls | No photo-dotted spacers |
| Substrate material | Polycarbonate | Polycarbonate |
| Pressing stess and short occurring frequency (%) between substrates when stacking | | |
| 5 MPa | under 0.001 | under 0.001 |
| 10 MPa | under 0.001 | 0.5 |
| 50 MPa | under 0.001 | above 1 |

From the results shown in Table 1, it is understood that the example 1, in which the stacking is performed under the condition such that the spacers 15 are formed in the sealing agent arranging portion 14, shows no short occurrence between the substrates as compared with the comparative example 1, in which the stacking is performed under the condition such that the spacers 15 are not formed in the sealing agent arranging portion 14, even if the pressing stress increases.

INDUSTRIAL APPLICABILITY

The image display device according to the invention is applicable to the image display unit for mobile equipment such as notebook personal computers, PDAs, cellular phones, handy terminal and so on; to the electric paper for electric book, electric newspaper and so on; to the bulletin boards such as signboards, posters, blackboards and so on; to the image display unit for electric calculator, home electric application products, auto supplies and so on; to the card display unit for point card, IC card and so on; and to the display unit for electric POP, electric advertisement, electric price tag, electric bin tag, electric musical score, RF-ID device and so on.

Claims

1. An information display device, in which display media are sealed between a front substrate (2) and a rear, opposed, substrate (1), at least one of the front substrate (2) and the rear substrate (1) being transparent, and at least one of the front substrate (2) and the rear substrate (1) being flexible, and, in which the display media, to which an electrostatic field is applied, are made to move so as to display information such as an image, spacers (15) having an insulation property are arranged on a surface of at least one of the front substrate (2) and the rear substrate (1) in a sealing agent arranging portion, which seals a space between the front substrate (2) and the rear substrate (1) by a sealing agent (13); **characterized in that** the sealing agent arranging portion (14) is disposed between outermost walls of partition walls (4) for forming cells (11) and a rib (12) for sealing a sealing agent (13) disposed on at least one of the front substrate (2) and the rear substrate (1).

2. The information display device according to claim 1, wherein the spacers (12) are manufactured simultaneously when partition walls (4) for forming cells (11) between the front substrate (2) and the rear substrate (1) are arranged on at least one of the front substrate (2) and the rear substrate (1).

3. The information display device according to claim 1 or 2, wherein a total area of the spacers (15) on the rear substrate (1) is 0.5 - 50 % of the sealing agent arranging portion (14) on the rear substrate (1).

**Patentansprüche**

1. Informations-Anzeigevorrichtung, bei welcher ein Anzeigemedium zwischen einem vorderen Substrat (2) und einem hinteren, gegenüberliegenden Substrat (1) versiegelt ist, wobei wenigstens eines des vorderen Substrats (2) und des rückwärtigen Substrats (1) transparent ist und wenigstens eines des vorderen Substrats (2) und des rückwärtigen Substrats (1) flexibel ist und wobei das Anzeigemedium, auf welches ein elektrostatisches Feld beaufschlagt wird, derart beweglich ist, um Informationen derart anzuzeigen, dass eine Abbildung sowie Abstandhalter (15) mit einem isolierenden Merkmal auf einer Oberfläche wenigstens eines von dem vorderen Substrat (2) und dem rückwärtigen Substrat (1) in einem die Dichtmasse anordnenden Abschnitt angeordnet sind, welcher einen Raum zwischen dem vorderen Substrat (2) und dem rückwärtigen Substrat (1) durch eine Dichtmasse (13) abdichtet; **dadurch gekennzeichnet, dass** der die Dichtmasse anordnende Abschnitt (14) zwischen den äußersten Wänden von Trennwänden (4) zum Bilden von Zellen (11) und einer Rippe (12) zum Versiegeln einer Dichtmasse (13) angeordnet ist, die an wenigstens einem von dem vorderen Substrat (2) und dem rückwärtigen Substrat (1) angeordnet ist.

2. Informations-Anzeigevorrichtung nach Anspruch 1, wobei die Abstandhalter (12) gleichzeitig hergestellt werden, wenn die Trennwände (4) zum Bilden von Zellen (11) zwischen dem vorderen Substrat (2) und dem rückwärtigen Substrat (1) an wenigstens einem des vorderen Substrats (2) und des rückwärtigen Substrats (1) angeordnet sind.

3. Informations-Anzeigevorrichtung nach Anspruch 1 oder 2, wobei der Gesamtbereich der Abstandhalter (15) am rückwärtigen Substrat (1) 0,5 - 50 % des die Dichtmasse anordnenden Abschnitts (14) am rückwärtigen Substrat (1) beträgt.

**Revendications**

1. Dispositif d'affichage d'informations, dans lequel un support d'affichage est scellé entre un substrat avant (2) et un substrat arrière opposé (1), au moins l'un dudit substrat avant (2) et dudit substrat arrière (1) étant transparent, et au moins l'un dudit substrat avant (2) et dudit substrat arrière (1) étant flexible, et dans lequel ledit support d'affichage, auquel est appliqué un champ électrostatique, se déplace de façon à afficher des informations telles qu'une image, des espaceurs (15) ayant une propriété d'isolation sont disposés sur une surface d'au moins l'un dudit substrat avant (2) et dudit substrat arrière (1) dans une partie agençant un agent d'étanchéité, qui ferme un espace situé entre ledit substrat avant (2) et ledit substrat arrière (1) à l'aide d'un agent d'étanchéité (13) ; **caractérisé en ce que** ladite partie agençant un agent d'étanchéité (14) est disposée entre les parois extérieures de parois de séparation (4) destinées à former des cellules (11) et une nervure (12) destinée à sceller un agent d'étanchéité (13) disposée sur au moins l'un dudit substrat avant (2) et dudit substrat arrière (1).

2. Dispositif d'affichage d'informations selon la revendication 1, dans lequel les espaceurs (12) sont fabriqués en même temps, quand les parois de séparation (4) destinées à former les cellules (11) entre le substrat avant (2) et le substrat arrière (1) sont disposées sur au moins l'un dudit substrat avant (2) et dudit substrat arrière (1).

3. Dispositif d'affichage d'informations selon la revendication 1 ou 2, dans lequel une surface totale des espaceurs (15) sur le substrat arrière (1) représente 0,5 à 50% de la partie agençant l'agent d'étanchéité (14) sur le substrat arrière (1).

# FIG. 1

(a)

(b)

# FIG. 2

(a)                          (b)

# FIG. 3

(a)                    (b)

# FIG. 4

## (a)

## (b)

Cross section of A portion

FIG. 5

Rear substrate

Front substrate  14

ABCDEEGHI.JK  21

4  15

16

1

22  23

Adhering

13

ABCDEEGHIJK

14

16

15

21

23  22

13  15

4

14

EP 1 715 376 B1

## FIG. 6

Square cell
grid arrangement

Square cell
honeycomb arrangement 1

Circular cell
grid arrangement

Line cell

honeycomb arrangement

Triangular cell
grid arrangement

Circular cell
honeycomb arrangement

Triangular cell
honeycomb arrangement

Square cell
mesh arrangement

Square cell
honeycomb arrangement 2

EP 1 715 376 B1

# FIG. 7

(a)

(b)

(c)

(d)

(e)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03104884 A

- EP 1712949 A

**Non-patent literature cited in the description**

- *The Imaging Society of Japan "Japan Hardcopy '99,* 21 July 1999, 249-252